# FASCICULE DE BREVET EUROPEEN

(11) **EP 2 788 160 B1**
(45) Date de publication et mention de la délivrance du brevet: **06.04.2016**
(21) Numéro de dépôt: 12798694.1
(22) Date de dépôt: 03.12.2012
(51) Int. Cl.: B29C 33/30, B29C 33/04, B29C 49/48

(54) **ENSEMBLE POUR LA FIXATION, AVEC RACCORDEMENT FLUIDIQUE, D'UN FOND DE MOULE SUR UN SUPPORT**
ANORDNUNG ZUR BEFESTIGUNG EINES FORMUNTERTEILS MIT EINER FLUIDVERBINDUNG AN EINEM HALTER
ASSEMBLY FOR FASTENING, WITH FLUID CONNECTION, A MOULD BOTTOM TO A HOLDER

(30) Priorité: 08.12.2011 FR 1161314
(43) Date de publication de la demande: 15.10.2014
(73) Titulaire: Sidel Participations, 76930 Octeville sur Mer (FR)
(72) Inventeur: CIRETTE, Damien, F-76930 Octeville Sur Mer (FR); PRIEUR, Arnaud, F-76930 Octeville Sur Mer (FR)
(74) Mandataire: Siloret, Patrick
(86) Numéro de dépôt international: PCT/EP2012/074255
(87) Numéro de publication internationale: WO 2013/083523

(56) Documents cités:
- DE-A1-102009 054 385
- FR-A1- 2 902 688

## Description

La présente invention concerne un ensemble pour la fixation, avec raccordement fluidique, d'un fond de moule sur un support.

L'invention se rapporte au domaine de la fabrication des récipients, notamment par soufflage ou par étirage-soufflage.

Le soufflage des récipients a lieu dans un moule, muni d'une cavité dans laquelle on introduit une préforme ou ébauche (généralement en matière thermoplastique) préalablement chauffée, cette préforme étant mise sous pression pour lui conférer une forme souhaitée correspondant à celle de la cavité.

Selon une conception connue, les moules sont réalisés en trois parties : deux demi-moules, articulés dans un plan perpendiculaire à un axe principal du moule, soit en translation, soit en rotation autour d'une charnière commune (le moule étant alors dit du type "portefeuille"), et un fond de moule déplaçable parallèlement à l'axe du moule.

Les moules sont généralement régulés en température, soit pour leur refroidissement dans les applications les plus courantes, soit pour leur chauffe dans les applications du type HR (*Heat Résistant*), dans lesquelles les récipients subissent une thermofixation consistant à les maintenir temporairement dans le moule chauffé pour les rendre mécaniquement résistants à la rétractation lors d'un remplissage à chaud.

Des conduits pour la circulation d'un fluide caloporteur (en général de l'huile ou de l'eau) sont à cet.effet ménagés dans les demi-moules et dans le fond de moule.

Dans une configuration ouverte, les deux demi-moules sont écartés l'un de l'autre et le fond de moule se trouve dans une position basse, ce qui permet l'évacuation d'un récipient formé et l'introduction d'une nouvelle préforme.

Dans une configuration fermée, le fond de moule est dans une position haute et les deux demi-moules sont refermés sur lui.

Afin de permettre l'interchangeabilité du fond de moule, en particulier pour autoriser la fabrication de récipients de gammes (et de formes) différentes au sein d'une même machine, le fond de moule est ordinairement fixé sur un support coulissant, muni d'un conduit d'amenée du fluide caloporteur, et d'un conduit d'évacuation.

Un ensemble de moyens est par conséquent mis en oeuvre pour assurer, de manière réversible, tant la fixation du fond de moule sur le support (encore appelé "sellette"), que le raccordement fluidique avec une continuité étanche des circulations du fluide caloporteur.

Le document DE-10.2009.054385 décrit et représente un exemple non limitatif d'un tel ensemble pour la fixation, avec raccordement fluidique, d'un fond de moule sur un support, selon le préambule de la revendication 1.

Le document WO-2008/000938 décrit et représente un autre exemple d'un ensemble pour la fixation, avec raccordement fluidique, d'un fond de moule sur un support.

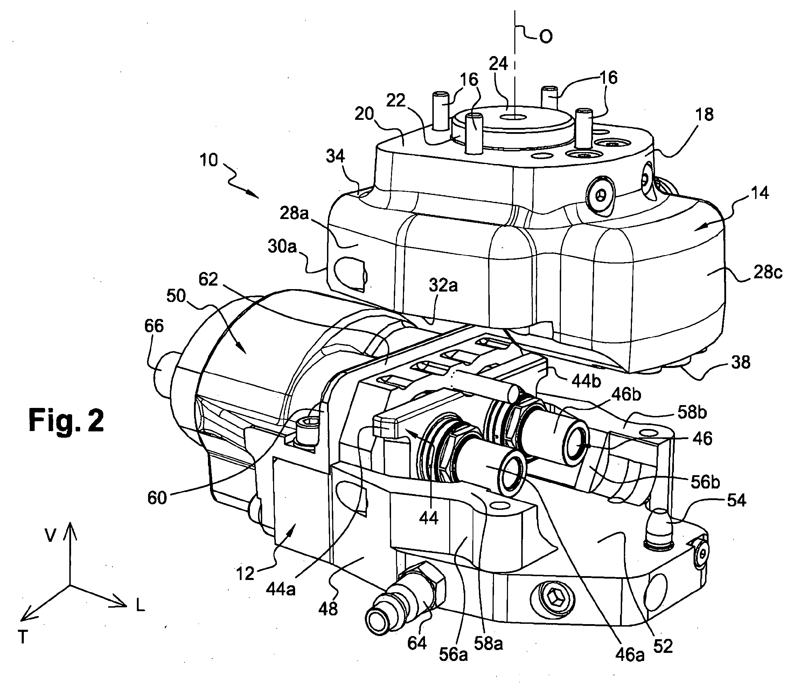

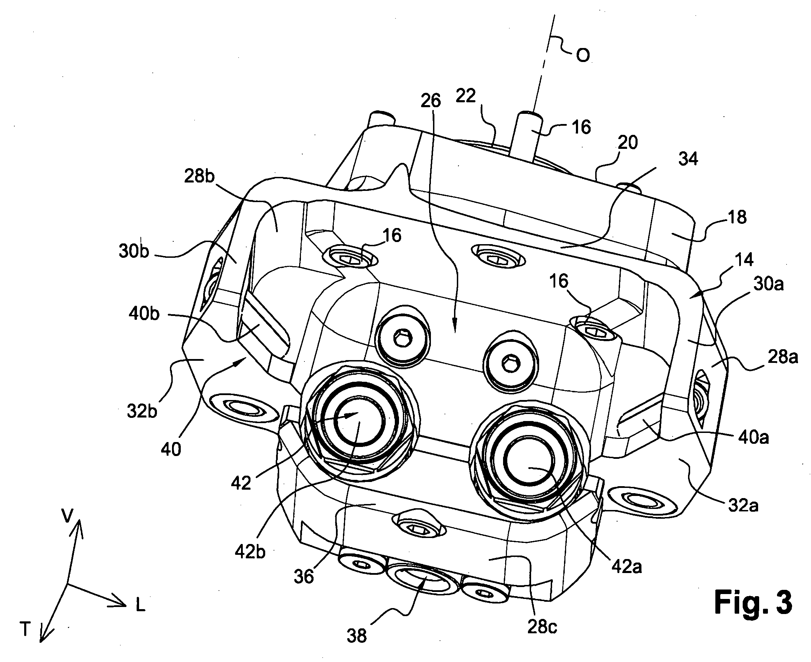

Selon ce dernier document et tel qu'illustré par les figures 2 et 3, le fond de moule est apte à être fixé de manière amovible ou démontable sur une semelle qui forme une interface entre le fond de moule et ledit support et l'ensemble comporte principalement un dispositif commandé de verrouillage à billes et un dispositif de raccordement fluidique.

Le dispositif de verrouillage à billes présente différents inconvénients. En effet, outre la complexité de son montage, un tel dispositif est particulièrement coûteux car il nécessite de nombreuses parois et requiert l'utilisation de matériau présentant une dureté appropriée par rapport aux billes ainsi qu'une grande précision d'usinage.

Selon la direction de l'axe principal du fond de moule, le support de l'ensemble présente un encombrement important qui est préjudiciable en ce qu'il limite d'autant la hauteur maximale des récipients pouvant être fabriqués dans le moule auquel appartient le fond de moule.

Pour contenir l'encombrement axial de l'ensemble, les moyens de raccordement du dispositif de raccordement fluidique sont choisis pour permettre un raccordement avec une très faible course ce qui limite d'autant la liberté de conception et conduit à l'utilisation de moyens de raccordement plus coûteux.

Le but de la présente invention est notamment de résoudre les inconvénients précités et de proposer une nouvelle conception d'ensemble pour la fixation avec raccordement fluidique d'un fond de moule sur un support qui soit tout particulièrement simple, fiable, de moindre coût et rapide afin de réduire la durée nécessaire au changement d'un fond de moule.

Dans ce but, l'invention propose un ensemble pour la fixation, avec raccordement fluidique, d'un fond de moule sur un support, dans lequel le fond de moule d'axe principal O est apte à être fixé de manière démontable sur une semelle formant une interface entre le fond de moule et ledit support, ledit ensemble comportant au moins :
- un dispositif de verrouillage qui, intervenant entre la semelle et le support, comporte respectivement des premiers moyens de verrouillage portés par le support et des deuxièmes moyens de verrouillage complémentaires portés au moins par la semelle, ledit dispositif de verrouillage pouvant occuper au moins:
   - un état verrouillé dans lequel la semelle est fixée audit support, et
   - un état déverrouillé dans lequel la semelle est libre d'être démontée ou montée sur ledit support ; et
- un dispositif de raccordement fluidique qui, intervenant entre la semelle et le support, comporte au moins des premiers moyens de raccordement portés par le support et destinés à coopérer avec des deuxièmes moyens de raccordement portés par la semelle, le dispositif de raccordement fluidique pouvant occuper au moins :
   - un état raccordé dans lequel un circuit fluidique du fond de moule est formé à la faveur du raccordement fluidique établi entre le support et la semelle par lesdits premiers moyens de raccordement assemblés avec les deuxièmes moyens de raccordement, et
   - un état séparé dans lequel lesdits premiers moyens de raccordement étant disjoints des deuxièmes moyens de raccordement, ledit circuit fluidique du fond de moule est interrompu entre le support et la semelle.

Un tel ensemble est, selon l'invention, caractérisé en ce que les premiers moyens de verrouillage et les premiers moyens de raccordement sont liés en déplacement par l'intermédiaire d'une pièce mobile de manière à former ensemble un équipage mobile.

L'équipage mobile selon l'invention formé par une paroi mobile dont sont solidaires les premiers moyens de verrouillage et les premiers moyens de raccordement, ainsi liés ensemble en déplacement, permet d'obtenir une conception d'ensemble qui présente de nombreux avantages par rapport à l'état de la technique.

Au nombre de ces avantages figurent tout particulièrement, du fait de l'absence de billes, une simplicité de fabrication (choix des matériaux, absence de traitements coûteux, facilité de montage, etc.), une fiabilité d'utilisation (absence de risque de coincement existant avec les billes).

Un ensemble selon l'invention permet également un gain de temps lors des opérations de montage et démontage d'un fond de moule dès lors que le verrouillage et le raccordement fluidique, comme le déverrouillage et l'interruption du raccordement fluidique, sont avantageusement obtenus simultanément en commandant en déplacement l'équipage mobile au moyen du dispositif d'actionnement associé.

Selon d'autres caractéristiques de l'invention :
- la semelle étant montée sur le support, le verrouillage et le raccordement fluidique, comme le déverrouillage et l'interruption du raccordement fluidique, sont obtenus simultanément en commandant en déplacement ledit équipage mobile ;
- ledit équipage mobile est apte à être déplacé entre au moins :
   - une première position dans laquelle le dispositif de verrouillage occupe l'état verrouillé et le dispositif de raccordement fluidique occupe l'état raccordé, et
   - une deuxième position dans laquelle le dispositif de verrouillage occupe l'état déverrouillé et le dispositif de raccordement fluidique occupe l'état séparé ;
- ledit équipage mobile se déplace entre lesdites première et deuxième positions suivant une direction non parallèle à l'axe principal O du fond de moule, notamment selon une direction orthogonale à l'axe principal O du fond de moule ;
- des moyens de rappel élastique sont interposés entre ladite pièce formée par une paroi mobile et une cloison fixe du support de manière à solliciter ladite paroi mobile vers au moins l'une desdites première et deuxième positions ;
- les moyens de rappel élastique sollicitent la paroi mobile vers la première position de l'équipage mobile de manière à obtenir d'une part un rappel automatique vers l'état verrouillé et, d'autre part, une assistance au raccordement fluidique lors de l'assemblage des premiers moyens de raccordement et des deuxièmes moyens de raccordement ;
- l'ensemble comporte un dispositif d'actionnement qui, associé audit équipage mobile, est apte à agir sur l'équipage mobile pour en commander sélectivement le déplacement entre les première et deuxième positions ;
   -- le dispositif d'actionnement comporte au moins un organe d'actionnement qui est lié, directement ou non, à ladite paroi mobile pour provoquer sélectivement le déplacement de l'équipage mobile entre au moins ladite première position dans laquelle les premiers moyens de verrouillage coopèrent avec les deuxièmes moyens de verrouillage pour fixer la semelle au support et dans laquelle les premiers moyens de raccordement sont engagés dans les deuxièmes moyens de raccordement de la semelle pour établir le raccordement fluidique et ladite deuxième position dans laquelle la semelle est libre par rapport au support, les premiers moyens de verrouillage en retrait ne coopérant pas avec les deuxièmes moyens de verrouillage du support, et dans laquelle les premiers moyens de raccordement sont escamotés pour ne pas interférer avec la semelle et pour interrompre par leur retrait le raccordement fluidique ;
- le dispositif d'actionnement est un vérin comportant au moins une chambre de commande associée à un piston qui, formant un organe d'actionnement, est monté de manière étanche dans un alésage du support et commandé en déplacement au moyen de ladite chambre de commande pour entraîner en déplacement ledit équipage mobile entre lesdites première et deuxième positions ;
- les premiers moyens de raccordement sont constitués par au moins un embout de type mâle qui est destiné à être reçu dans un raccord complémentaire de type femelle formant les deuxièmes moyens de raccordement ;
   -- les premiers et deuxièmes moyens de raccordement sont au moins dédoublés, les premiers moyens de raccordement comportant au moins un embout d'alimentation et un embout d'évacuation du fluide caloporteur respectivement associés à deux raccords complémentaires pour établir le raccordement fluidique du circuit fluidique ;
   -- le support comporte un connecteur d'entrée qui, relié à l'embout d'alimentation, est destiné à être raccordé à une conduite d'amenée du fluide caloporteur et un connecteur de sortie qui, relié à l'embout d'évacuation, est destiné à être relié à une conduite d'évacuation du fluide caloporteur ;
   -- l'ensemble comporte des moyens de centrage intervenant entre la semelle et le support, lesdits moyens de centrage comportant au moins un pion de centrage porté par le support et s'étendant parallèlement à l'axe principal O qui est reçu dans un trou complémentaire de la semelle lorsque ladite semelle est montée sur le support suivant la direction de l'axe principal O ;
- les premiers moyens de verrouillage portés par la paroi mobile sont constitués par au moins deux bras destinés à coopérer chacun avec une goupille complémentaire de la semelle formant lesdits deuxièmes moyens de verrouillage ;
   -- les premiers moyens de verrouillage portés par la paroi mobile sont constitués par une première paire de bras destinés à coopérer chacun avec une goupille que comporte la semelle et par une deuxième paire de bras destinés à coopérer chacun avec une goupille que comporte le support de manière que les efforts survenants lors du verrouillage opéré pour fixer ensemble la semelle et le support soient repris par ledit support ;
   -- les goupilles formant les deuxièmes moyens de verrouillage sont agencées obliquement par rapport à la direction de déplacement de l'équipage mobile, orthogonale à l'axe principal O du fond de moule, de manière à réduire la course nécessaire à l'obtention d'un changement d'état du dispositif de verrouillage et du dispositif de raccordement fluidique ;
   -- le support comporte au moins un connecteur pour alimenter en fluide, tel que de l'air sous pression, au moins la chambre de commande du vérin formant le dispositif d'actionnement associé.

D'autres caractéristiques et avantages de l'invention apparaîtront à la lecture de la description détaillée qui va suivre pour la compréhension de laquelle on se reportera aux dessins annexés dans lesquels :
- la figure 1 est une vue de côté en perspective d'un exemple de réalisation d'un ensemble selon l'invention représentant une semelle qui, associée au fond de moule, est montée sur un support ;
- la figure 2 est une vue en perspective qui représente l'ensemble selon la figure 1 avant le montage ou après le démontage de la semelle par rapport au support ;
- la figure 3 est une vue de dessous en perspective de la semelle qui représente notamment les deuxièmes moyens de verrouillage et les deuxièmes moyens de raccordement ;
- la figure 4 est une vue en coupe qui représente le support seul en attente du montage d'une semelle portant un fond de moule et qui illustre l'équipage mobile dans la première position correspondant aux états verrouillé et raccordé ;
- la figure 5 est une vue en coupe qui représente le support seul en attente du montage d'une semelle portant un fond de moule et qui illustre l'équipage mobile dans la deuxième position correspondant, après actionnement, aux états déverrouillé et séparé ;
- la figure 6 est une vue en coupe qui représente le support selon les figures 4 et 5 sur lequel a été monté une semelle et qui illustre, après rappel de l'équipage mobile dans la deuxième position à la première position, le dispositif de verrouillage à l'état verrouillé et le dispositif de raccordement à l'état raccordé ;
- la figure 7 est une vue en coupe de l'ensemble selon la figure 6 qui représente en détail la coopération entre les premiers moyens de verrouillage et les deuxièmes moyens de verrouillage lorsque, une semelle étant montée, le dispositif de verrouillage occupe l'état verrouillé.

Dans la description et les revendications, on adoptera par convention et à titre non limitatif les termes "avant" ou "arrière" en référence à la direction longitudinale, "supérieur" et "inférieur", en référence à la direction verticale indépendante de la gravité terrestre, et les directions longitudinale, verticale et transversale en référence au trièdre (L, V, T) indiqué sur les figures.

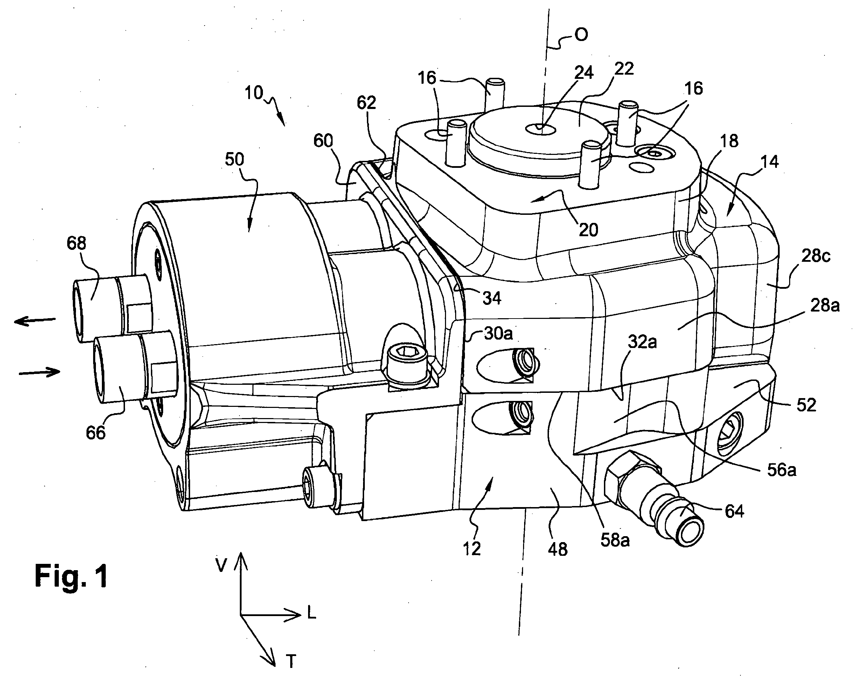

On a représenté à la figure 1, un ensemble 10 pour la fixation, avec raccordement fluidique, d'un fond de moule (non représenté) sur un support 12.

De manière connue, le fond de moule comporte dans sa partie supérieure une empreinte en creux correspondant au fond du récipient à fabriquer, un tel fond de moule à empreinte pétaloïde est par exemple représenté sur la figure 1 du document WO-2008/000938 précité.

Ledit ensemble 10 ne constitue qu'un exemple de réalisation destiné à illustrer l'invention et n'a en conséquence aucun caractère limitatif.

De préférence, le fond de moule est apte à être fixé de manière démontable sur une semelle 14 formant une interface entre le fond de moule et ledit support 12.

La figure 1 représente la semelle 14 montée sur le support 12 de l'ensemble 10, tandis que la figure 2 la représente démontée, séparés l'un de l'autre.

Avantageusement, une telle conception en deux parties permet d'optimiser la réalisation de chacune desdites parties, notamment dans le choix des matériaux employés, d'avoir une complexité de fabrication moindre par rapport à une pièce unique "multifonction" et ce faisant d'en réduire les coûts de fabrication.

De plus, dans une telle conception, la semelle 14 et le support 12 sont associés à un moule donné et sont standardisés. En effet, une même et unique semelle 14 est apte à permettre la fixation de plusieurs fonds de moule différents correspondant à autant de récipients différents à fabriquer.

En variante, le fond de moule et la semelle 14 sont réalisés en une seule pièce, monobloc, et les moyens de fixation au support 12 comme les moyens de raccordement fluidique pour le refroidissement ou la chauffe y sont alors intégrés et ceci pour chaque fond de moule.

Le fond de moule présente un axe principal O.

Par convention, l'axe principal O est ici d'orientation verticale selon le trièdre (L, V, T), sans référence à la gravité terrestre, et ledit axe principal O est commun au fond de moule et à la semelle 14.

De préférence, la fixation du fond de moule sur la semelle 14 est réalisée par vissage, par exemple au moyen de vis 16 solidaires de la semelle 14 dont les tiges filetées sont reçues dans des trous taraudés complémentaires du fond de moule.

Tel qu'illustré sur les figures 1 et 2, les vis 16 sont au nombre de quatre et s'étendent suivant la direction verticale, c'est-à-dire parallèlement à l'axe O principal du fond de moule et de la semelle 14 et sont orientées la tête en bas.

On décrira tout d'abord ci-après la semelle 14 qui est représentée, en association avec le support 12 sur les figures 1 et 2, et plus particulièrement sur la figure 3.

La semelle 14 comporte une partie supérieure formant un socle 18 destiné à recevoir le fond de moule. Le socle 18 délimite une face 20 supérieure horizontale qui est traversée par les tiges filetées des vis 16 et qui comporte centralement un téton 22 s'étendant en saillie vers le haut par rapport à la face 20 supérieure horizontale.

Le téton 22 du socle 18 comporte en son centre au moins un orifice 24 destiné à permettre le passage du fluide caloporteur de la semelle 14 vers le fond de moule.

La semelle 14 comporte une partie inférieure qui, s'étendant sous le socle 18 formant la partie supérieure, délimite globalement un logement 26 de sorte que ladite partie inférieure de la semelle 14, évidée, est ouverte verticalement vers le bas et longitudinalement vers l'arrière.

La partie inférieure de la semelle 14 comporte deux ailes 28a et 28b d'orientation longitudinale, respectivement reliées transversalement entre elles par une partie 28c qui ferme longitudinalement vers l'avant ledit logement 26.

L'aile 28a comporte, longitudinalement à son extrémité libre arrière, un bord 30a d'orientation verticale et un bord 32a d'orientation longitudinale, de la même manière l'aile 28b qui est transversalement opposée à l'aile 28a, comporte un bord 30b d'orientation verticale et un bord 32b d'orientation longitudinale.

Les bords 30a et 30b verticaux sont reliés transversalement par un bord 34 supérieur.

Les bords 32a et 32b longitudinaux sont reliés transversalement par un bord 36 inférieur de la partie 28c.

La semelle 14 comporte un trou 38 dans ladite partie 28c agencée longitudinalement à l'avant de sa partie inférieure et délimitant le logement 26, le trou 38 étant ouvert verticalement vers le bas.

Tel qu'illustré par la figure 3, la semelle 14 comporte des deuxièmes moyens 40 de verrouillage et des deuxièmes moyens 42 de raccordement.

De préférence, les deuxièmes moyens 40 de verrouillage sont constitués par au moins deux goupilles, respectivement 40a et 40b, qui sont chacune portées par l'une des ailes 28a, 28b de la partie inférieure de la semelle 14 et qui s'étendent à l'intérieur du logement 26.

Avantageusement, les goupilles 40a et 40b sont agencées obliquement par rapport à la direction longitudinale.

Les goupilles 40a, 40b constituent des moyens simples et économiques qui sont par exemple rapportées à fixation par vissage afin d'être montées solidaires des ailes 28a, 28b de la semelle 14.

Les deuxièmes moyens 40 de verrouillage sont destinés à coopérer sélectivement avec des premiers moyens 44 de verrouillage portés par le support 12 qui seront décrits en détails ultérieurement.

Les deuxièmes moyens 42 de raccordement portés par la semelle 14 sont destinés à coopérer sélectivement avec des premiers moyens 46 de raccordement portés par le support 12 qui seront décrits en détails ultérieurement.

.De préférence, les premiers moyens 46 de raccordement sont constitués par au moins un embout de type mâle qui est destiné à être reçu dans un raccord complémentaire de type femelle formant les deuxièmes moyens 42 de raccordement.

Tel qu'illustré sur les figures 2 et 3, les moyens 42 de raccordement fluidique comportent deux raccords de type femelle, respectivement 42a et 42b, destinés à recevoir chacun un embout de type mâle, complémentaire, respectivement référencés 46a et 46b.

Avantageusement, les premiers et deuxièmes moyens de raccordement sont donc au moins dédoublés, les premiers moyens 46 de raccordement comportant au moins un embout 46a d'alimentation en fluide caloporteur et un embout 46b d'évacuation du fluide caloporteur.

Lesdits embouts 46a, 46b sont respectivement associés aux deux raccords 42a et 42b complémentaires pour établir le raccordement fluidique du circuit.

Les embouts 46a, 46b et les raccords 42a, 42b associés formant ensemble le dispositif de raccordement fluidique sont de préférence réalisés avec des moyens de raccordement de type "auto-obturant".

Ainsi, l'ensemble 10 comporte un dispositif de raccordement fluidique qui, intervenant entre la semelle 14 et le support 12, comporte au moins lesdits premiers moyens 46 de raccordement portés par le support 12 qui sont destinés à coopérer avec les deuxièmes moyens 42 de raccordement portés par la semelle 14.

Avantageusement, le dispositif de raccordement fluidique de l'ensemble 10 est susceptible d'occuper au moins un état raccordé et un état séparé.

L'état raccordé correspond à un état dans lequel un circuit fluidique du fond de moule est formé à la faveur du raccordement fluidique établi entre le support 12 et la semelle 14 par lesdits premiers moyens 46 de raccordement assemblés avec les deuxièmes 42 moyens de raccordement pour permettre une circulation du fluide caloporteur.

L'état séparé correspond à un état dans lequel lesdits premiers moyens 46 de raccordement étant disjoints des deuxièmes moyens 42 de raccordement, ledit circuit fluidique du fond de moule est interrompu entre le support 12 et la semelle 14.

L'ensemble 10 comporte un dispositif de verrouillage qui, intervenant entre la semelle 14 et le support 12, comporte respectivement des premiers moyens 44 de verrouillage portés par le support 12 et des deuxièmes moyens 40 de verrouillage complémentaires portés au moins par la semelle 14.

Avantageusement, le dispositif de verrouillage de l'ensemble 10 est susceptible d'occuper au moins un état verrouillé et un état déverrouillé.

L'état verrouillé du dispositif de verrouillage correspond à un état dans lequel la semelle 14 est fixée audit support 12, et l'état déverrouillé correspond à un état dans lequel la semelle 14 est libre d'être démontée ou montée sur ledit support 12.

On décrira maintenant, en référence notamment à la figure 2, le support 12 destiné à recevoir la semelle 14 ensemble le fond de moule puis on décrira selon l'exemple de réalisation lesdits premiers moyens 44 de verrouillage et premiers moyens 46 de raccordement intervenants entre le support 12 et la semelle 14.

Le support 12 comporte un corps 48 qui s'étend globalement longitudinalement. Le corps 48 du support 12 comporte une partie avant conformée en une embase qui est complémentaire de la semelle 14 devant y être montée, et une partie arrière recevant un dispositif 50 d'actionnement associé.

L'embase du support 12 comporte notamment une face 52 horizontale à l'extrémité avant de laquelle est agencé au moins un moyen de centrage, tel qu'un pion 54, destiné à être reçu dans le trou 38 que comporte la semelle 14.

Lorsque la semelle 14 est montée sur le support 12, la face 52 reçoit donc principalement la partie 28c de la semelle 14.

La partie avant du support 12 est, longitudinalement à l'opposé du pion 54 de centrage, délimitée transversalement par deux joues 56a et 56b d'orientation longitudinale.

La joue 56a comporte un bord 58a supérieur et la joue 56b comporte un bord 58b supérieur, lesdits bords 58a et 58b étant destinés à coopérer avec les bords 32a et 32b de la partie inférieure de la semelle 14 lorsque ladite semelle 14 est montée sur le support 12 comme cela est illustré à la figure 1.

Le support 12 comporte encore, centralement, une partie formant une arche 60 qui, s'étendant transversalement, délimite un bord 62 destiné à coopérer avec le bord 34 de la semelle 14 lorsque ladite semelle 14 est montée sur le support 12.

Outre le pion 54 de centrage, les bords 58a, 58b et 62 participent également au centrage de la semelle 14 par rapport au support 12 lorsque ladite semelle 14 y est montée de sorte que l'ensemble constitue des moyens de centrage intervenant entre la semelle 14 et le support 12.

Le corps 48 du support 12 comporte au moins un connecteur 64 destiné permettre une alimentation en fluide, en particulier en air comprimé par exemple à une pression de l'ordre de 7 bars.

Le support 12 comporte un connecteur 66 d'entrée qui, relié à l'embout 46a d'alimentation, est destiné à être raccordé à une conduite d'amenée (non représentée) du fluide caloporteur et un connecteur 68 de sortie qui, relié à l'embout 46b d'évacuation, est destiné à être relié à une conduite d'évacuation (non représentée) du fluide caloporteur.

Le connecteur 66 d'entrée et le connecteur 68 de sortie sont agencés transversalement côte à côte l'un de l'autre et disposés longitudinalement à l'extrémité arrière du support 12.

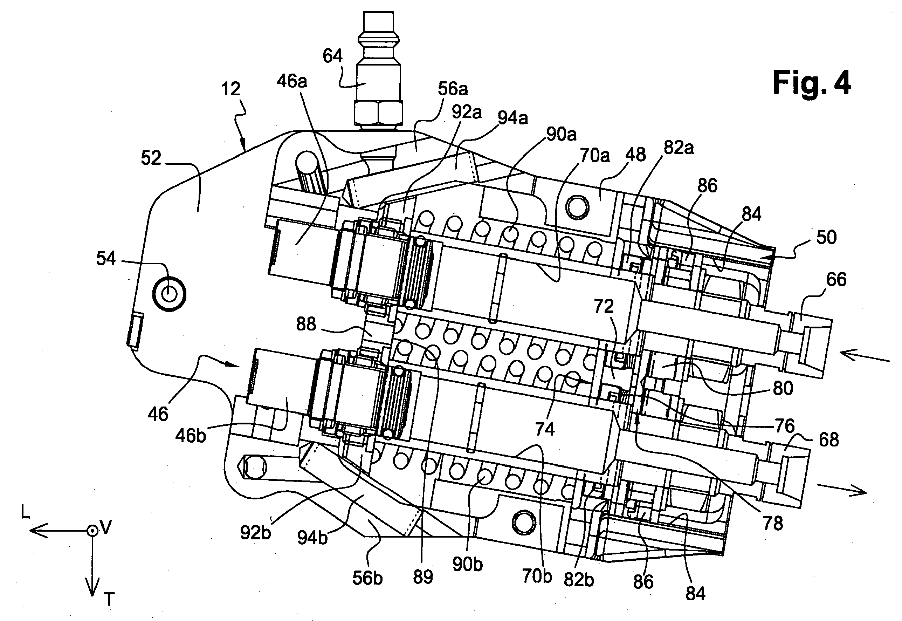

Tel qu'illustré sur les figures 4 à 6, le connecteur 66 d'entrée et l'embout 46a d'alimentation sont reliés l'un à l'autre par l'intermédiaire d'un tronçon 70a de conduite, lequel tronçon 70a de conduite les raccorde longitudinalement ensemble à travers le dispositif 50 d'actionnement.

De manière analogue, le connecteur 68 de sortie et l'embout 46b d'évacuation sont reliés l'un à l'autre par l'intermédiaire d'un tronçon 70b de conduite, lequel tronçon 70b de conduite les raccorde longitudinalement ensemble à travers le dispositif 50 d'actionnement.

Le tronçon 70a de conduite et le tronçon 70b de conduite s'étendent donc longitudinalement, parallèlement l'un à l'autre, depuis les connecteurs 66, 68 agencés à l'arrière jusqu'aux embouts 46a, 46b agencés à l'avant du support 12.

Le tronçon 70a de conduite et le tronçon 70b de conduite traversent une cloison 72 fixe du support 12 qui s'étend transversalement et comporte respectivement une face 74 avant et une face 76 arrière.

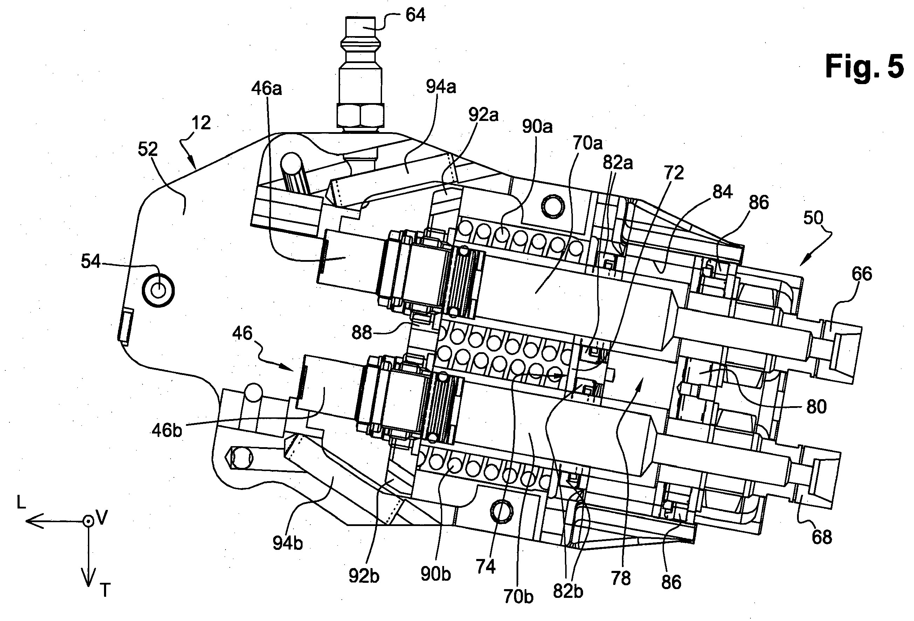

De préférence, le dispositif 50 d'actionnement est un vérin comportant au moins une chambre 78 de commande (voir figure 5) qui est associée à un piston 80 mobile.

Avantageusement, le vérin 50 est de type pneumatique et est apte à être alimenté sélectivement en fluide grâce au connecteur 64 qui est destiné à être relié à une source d'alimentation en air comprimé.

En variante, le vérin 50 est un vérin de type hydraulique. Plus généralement, le dispositif 50 d'actionnement est susceptible d'être réalisé avec de nombreux types d'actionneurs différents, notamment mais non limitativement, un actionneur électrique, électro-mécanique ou encore électromagnétique.

Toutefois, le vérin 50 pneumatique est avantageux en ce qu'il est susceptible d'être facilement alimenté en air comprimé dès lors qu'une telle source d'énergie est déjà présente et disponible sur le poste comportant le moule dans lequel est opéré, par soufflage ou par étirage-soufflage, la transformation de la préforme en récipient. Cependant, l'air comprimé sera amené préférentiellement depuis l'extérieur du poste de soufflage, via un raccord rapide ou une connexion automatique, afin d'avoir une coupure physique de l'alimentation durant la production pour éviter toute déconnexion involontaire.

La chambre 78 de commande est délimitée transversalement, d'une part, à l'avant par la face 76 arrière de la cloison 72 et, d'autre part, à l'arrière par la face avant du piston 80.

Pour assurer l'étanchéité à l'avant de ladite chambre 78 de commande, des premiers moyens d'étanchéité sont agencés au niveau de la cloison 72 fixe et de chacun des tronçons 70a, 70b de conduite traversant ladite cloison 72.

Les moyens 82a et 82b d'étanchéité sont par exemple constitués par des joints, tels que des joints à lèvre(s).

Le piston 80 est apte à être commandé sélectivement en déplacement au moyen de ladite chambre 78 de commande.

Le piston 80 est monté coulissant dans un alésage 84 que comporte le vérin 50, ledit vérin 50 étant solidaire du support 12.

L'étanchéité à l'arrière de la chambre 78 de commande est assurée par des seconds moyens 86 d'étanchéité interposés entre le piston 80 et l'alésage 84.

Les seconds moyens 86 d'étanchéité sont par exemple constitués par au moins un joint, tel qu'un joint à lèvre(s) entourant le piston 80 qui présente globalement une forme ovoïde.

Les premiers moyens 46 de raccordement formés par les embouts 46a, 46b sont liés en déplacement au piston 80 du dispositif 50 d'actionnement.

De préférence, les embouts 46a, 46b sont directement liés au piston 80 par l'intermédiaire des tronçons 70a, 70b de conduite qui en sont respectivement solidaires.

Lorsque le piston 80 coulisse longitudinalement de l'avant vers l'arrière et réciproquement dans l'alésage 84, les premiers moyens 46 de raccordement sont alors également déplacés.

Selon l'invention, les premiers moyens 44 de verrouillage et les premiers moyens 46 de raccordement sont liés en déplacement par l'intermédiaire d'une paroi 88 mobile de manière à former ensemble un équipage mobile.

Avantageusement, les premiers moyens 46 de raccordement sont solidaires de la paroi 88 mobile de sorte que ladite paroi 88 mobile se déplace avec les premiers moyens 46 de raccordement lorsque lesdits premiers moyens 46 de raccordement sont mus par le dispositif 50 d'actionnement.

Les premiers moyens 44 de verrouillage étant également portés par ladite paroi 88 mobile, un équipage mobile comportant la paroi 88, les premiers moyens 44 de verrouillage et les premiers moyens 46 de raccordement est obtenu.

L'équipage mobile constitue un sous-ensemble unitaire qui est apte à être commandé sélectivement en déplacement par le dispositif 50 d'actionnement, les premiers moyens 44 de verrouillage et les premiers moyens 46 de raccordement étant respectivement déplacés pour provoquer un changement d'état tant du dispositif de verrouillage que du dispositif de raccordement.

La paroi 88 mobile s'étend transversalement comme le piston 80 et est susceptible d'être déplacée longitudinalement de l'avant vers l'arrière et réciproquement lorsque le piston 80, commandé au moyen de la chambre 78 de commande, coulisse dans l'alésage 84.

Ainsi, l'équipage mobile est apte à être déplacé entre au moins une première position dans laquelle le dispositif de verrouillage occupe l'état verrouillé et le dispositif de raccordement fluidique occupe l'état raccordé, et une deuxième position dans laquelle le dispositif de verrouillage occupe l'état déverrouillé et le dispositif de raccordement fluidique occupe l'état séparé.

De préférence, l'équipage mobile coulisse selon la direction longitudinale entre lesdites première position et deuxième position.

Avantageusement, la semelle 14 étant montée sur le support 12, le verrouillage et le raccordement fluidique, comme le déverrouillage et l'interruption du raccordement fluidique, sont obtenus simultanément en commandant en déplacement ledit équipage mobile au moyen du dispositif 50 d'actionnement.

Avantageusement, ledit équipage mobile se déplace entre lesdites première et deuxième positions suivant une direction non parallèle à l'axe principal O du fond de moule.

De préférence, ledit équipage mobile se déplace entre lesdites première et deuxième positions selon une direction orthogonale à l'axe principal O du fond de moule.

Avantageusement, des moyens de rappel élastique sont interposés entre une face 89 arrière de ladite paroi 88 mobile et la cloison 72 fixe du support 12 de manière à solliciter ladite paroi 88 mobile vers au moins l'une desdites première et deuxième positions.

De préférence, les moyens de rappel élastique comportent au moins un premier ressort 90a et un deuxième ressort 90b, chacun des ressorts 90a, 90b s'étendant longitudinalement et étant traversé centralement par le tronçon 70a, 70b de conduite correspondant de sorte que lesdits ressorts 90a, 90b de rappel élastique entourent les tronçons 70a et 70b de conduite.

De préférence, les moyens 90a, 90b de rappel élastique sollicitent la paroi 88 mobile vers la première position de l'équipage mobile de manière à obtenir d'une part un rappel automatique vers l'état verrouillé et, d'autre part, une assistance au raccordement fluidique lors de l'assemblage des premiers moyens 46 de raccordement et des deuxièmes moyens 42 de raccordement.

Le dispositif 50 d'actionnement de l'ensemble 10 formé par le vérin est apte à agir sur l'équipage mobile pour en commander sélectivement le déplacement entre les première et deuxième positions et ceci à l'encontre des ressorts 90a, 90b de rappel élastique lorsque l'équipage mobile est déplacé par le piston 80 de ladite première position (figure 4) vers ladite deuxième position (figure 5).

Le piston 80 constitue donc un organe d'actionnement de l'équipage mobile qui est avantageusement lié, ici directement en variante indirectement, audit équipage mobile et à la paroi 88 mobile en particulier par l'intermédiaire des tronçons 70a et 70b de conduite.

Le piston 80 formant l'organe d'actionnement est apte à provoquer sélectivement le déplacement dudit équipage mobile entre au moins :
- ladite première position dans laquelle les premiers moyens 44 de verrouillage coopèrent avec les deuxièmes 40 moyens de verrouillage pour fixer la semelle 14 au support 12 et dans laquelle les premiers 46 moyens de raccordement sont engagés dans les deuxièmes moyens 42 de raccordement de la semelle 14 pour établir le raccordement fluidique ; et
- ladite deuxième position dans laquelle la semelle 14 est libre par rapport au support 12, les premiers moyens 44 de verrouillage en retrait ne coopérant pas avec les deuxièmes moyens 40 de verrouillage du support 12, et dans laquelle les premiers moyens 42 de raccordement sont escamotés pour ne pas interférer avec la semelle 14 et pour interrompre par leur retrait le raccordement fluidique.

Les premiers moyens 44 de verrouillage portés par la paroi 88 mobile sont constitués par au moins deux bras, respectivement 44a et 44b, destinés à coopérer chacun avec l'une des goupilles 40a, 40b complémentaires de la semelle 14 formant tout ou partie desdits deuxièmes 40 moyens de verrouillage.

De préférence, les premiers moyens 44 de verrouillage portés par la paroi 88 mobile sont constitués par une première paire de bras formés par lesdits bras 44a et 44b, dits supérieurs, et par une deuxième paire de bras 92a et 92b, dits inférieurs.

Le support 12 comporte avantageusement deux goupilles, respectivement 94a et 94b, qui sont portées par les joues 56a et 56b et qui, de manière analogue à celles 40a, 40b de la semelle 14, sont agencées obliquement par rapport à la direction longitudinale de déplacement de l'équipage mobile, c'est-à-dire une direction orthogonale à l'axe principal O du fond de moule.

Avantageusement, l'agencement oblique des goupilles 40a, 40b et 94a, 94b permet de réduire la course nécessaire à l'obtention d'un changement d'état du dispositif de verrouillage et du dispositif de raccordement fluidique et surtout d'avoir un escamotage naturel du moyen de verrouillage par rapport aux goupilles en position déverrouillée.

Lorsque l'équipage mobile occupe ladite première position et qu'une semelle 14 est montée sur le support 12, les bras 44a et 44b supérieurs de la première paire coopèrent respectivement avec les goupilles 40a et 40b de la semelle 14 tandis que les bras 92a et 92b inférieurs de la deuxième paire coopèrent chacun avec une des goupilles 94a et 94b que comporte le support 12.

Par comparaison avec un dispositif de verrouillage comportant uniquement des bras 44a et 44b, un tel dispositif de verrouillage comportant une première et une deuxième paire de bras permet une reprise par le support 12 des efforts appliqués à l'état verrouillé, sans que ne soit sollicité le guidage de l'équipage mobile en conséquence devant essentiellement être guidé pour coulisser longitudinalement.

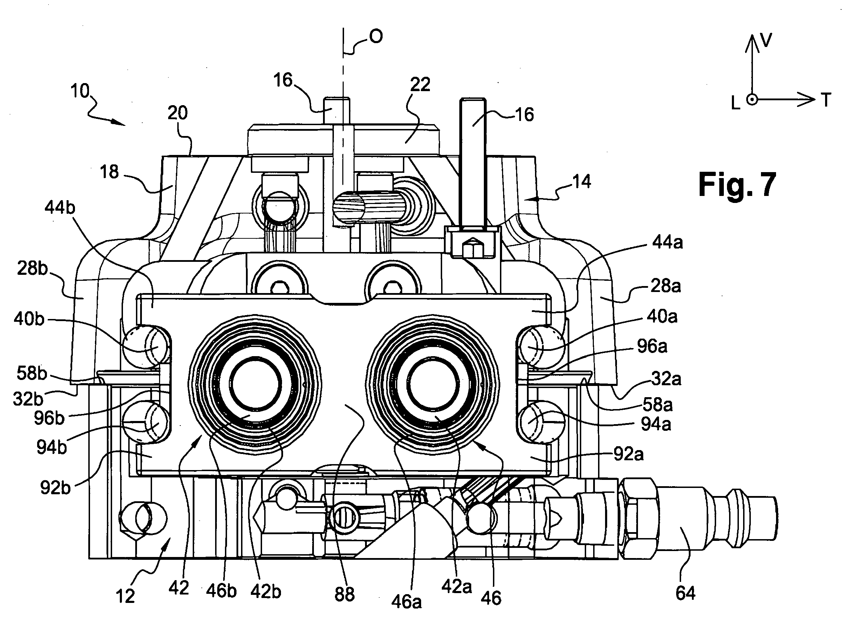

Tel qu'illustré à la figure 7, les bras 44a et 92a sont réalisés dans la paroi 88 mobile à la faveur d'une encoche 96a dans laquelle sont reçues les goupilles 40a et 94a correspondantes qui sont ainsi enserrées par lesdits bras 44a, 92a.

De manière analogue et symétrique pour les bras 44b et 92b situés transversalement à l'opposé desdits bras 44a et 92a, les bras 44a et 92a sont réalisés dans la paroi 88 mobile à la faveur d'une encoche 96b dans laquelle sont reçues les goupilles 40b et 94b lorsque une semelle 14 est montée sur le support 12 et que l'équipage mobile occupe la première position correspondant aux états verrouillés et raccordés.

On décrira maintenant le fonctionnement de l'ensemble 10 lors du montage d'une semelle 14 sur le support 12, puis son démontage en vue d'opérer notamment un changement de fond de moule.

La figure 4 représente le support 12 dans l'attente de montage d'une semelle 14.

L'équipage mobile occupe la première position correspondant aux états verrouillé et raccordé, première position vers laquelle les moyens de rappel élastique formés par les ressorts 90a, 90b sollicitent la paroi 88 mobile portant les premiers moyens 46 de raccordement formés par les embouts 46a, 46b et les premiers moyens 44 de verrouillage formés par les bras 40a, 40b et 92a, 92b.

Pour pouvoir procéder au montage d'une semelle 14 sur l'embase 48 du support, l'équipage mobile doit être déplacé de sa première position vers sa deuxième position, c'est-à-dire actionné pour coulisser longitudinalement de l'avant vers l'arrière.

Pour ce faire, le support 12 étant alimenté en air comprimé par l'intermédiaire du connecteur 64, de l'air sous pression est admis dans la chambre 78 de commande du vérin pneumatique formant le dispositif 50 d'actionnement.

L'augmentation de la pression dans la chambre 78 de commande provoque le coulissement du piston 80 qui coulisse alors longitudinalement de l'avant vers l'arrière, en s'éloignant de la cloison 72 fixe.

Le déplacement du piston 80 s'accompagne d'un déplacement simultané de l'équipage mobile dès lors que ledit équipage est lié, ici sans jeu, en déplacement au piston 80 formant un organe d'actionnement de ce dernier.

Ainsi, le piston 80 sollicité par la pression établie dans la chambre 78 de commande est mû longitudinalement de l'avant vers l'arrière, à l'encontre des ressorts 90a, 90b de rappel élastique, et coulissant dans l'alésage 84 il entraîne la paroi 88 mobile de l'équipage mobile jusqu'à atteindre la deuxième position représentée sur la figure 5.

Dans cette deuxième position, les ressorts 90a, 90b de rappel élastique de l'équipage mobile vers la première position sont comprimés.

Lorsque l'équipage mobile atteint la deuxième position, le dispositif de verrouillage est à l'état déverrouillé, les bras 92a et 92b inférieurs n'étant pas engagés pour coopérer avec les goupilles 94a et 94b associées que comporte le support 12.

Avantageusement, le déplacement de l'équipage mobile vers la deuxième position permet d'escamoter longitudinalement vers l'arrière les embouts 46a, 46b formant les premiers moyens de raccordement du dispositif de raccordement fluidique, grâce à quoi il n'y a, lors du montage de la semelle 14, pas d'interférence avec les raccords 42a et 42b formant les deuxièmes moyens de raccordement.

Tel que représenté sur la figure 5, le support 12 est alors apte à recevoir une semelle 14. La semelle 14 est montée suivant la direction verticale, parallèlement à l'axe principal O, de haut en bas vers le support 12 afin notamment que le pion 54 de centrage s'engage dans le trou 38 complémentaire.

La semelle 14 étant montée sur le support 12, le dispositif 50 d'actionnement est alors commandé pour provoquer un changement d'état des dispositifs de verrouillage et de raccordement fluidique.

Le vérin 50 pneumatique est avantageusement un vérin simple effet, en raison de la présence de moyens 90a, 90b de rappel élastique de l'équipage mobile.

En variante, le dispositif 50 d'actionnement est un vérin double effet, en particulier en l'absence de moyens de rappel élastique.

L'interruption de l'alimentation en air comprimé de la chambre 78 de commande du piston 80 a pour conséquence que l'équipage mobile est alors automatiquement rappelé de la deuxième position vers la première position, ledit équipage mobile ainsi que le piston 80 coulissant alors longitudinalement de l'arrière vers l'avant.

Avantageusement, un tel équipage mobile permet d'obtenir par le déplacement en translation entre les premières et deuxièmes positions, une course importante et surtout une assistance au raccordement par les ressorts 90a, 90b sollicitant les embouts 46a, 46b vers l'avant et les raccords 42a, 42b en vis-à-vis.

En effet, une telle assistance au raccordement est particulièrement avantageuse dans le cas de moyens de raccordement fluidique de type "auto-obturant" pour vaincre la résistance opposée lors du raccordement à chaque embout 46a, 46b, tant par le clapet du raccord 42a, 42b que par la pression du fluide caloporteur présent.

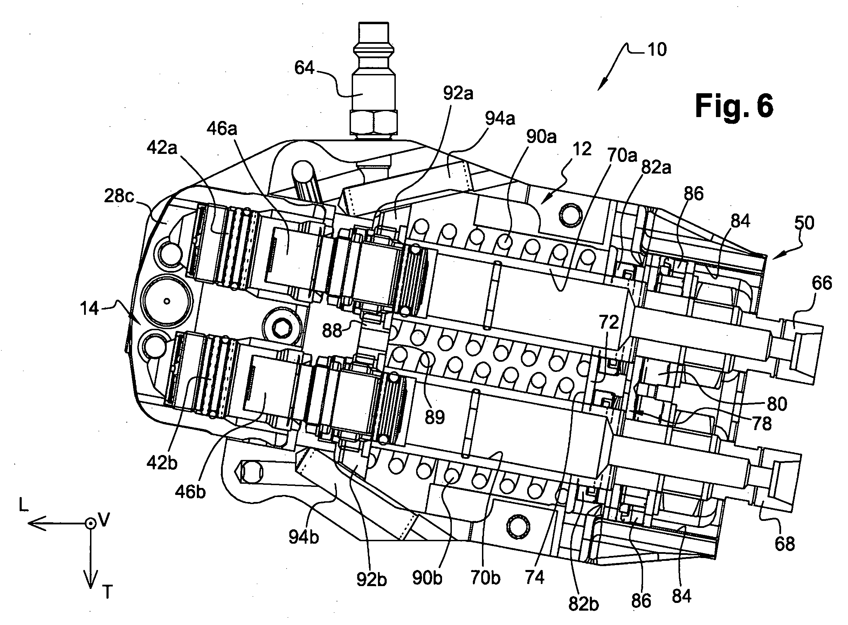

Tel qu'illustré à la figure 6, l'ensemble 10 est alors prêt à être utilisé pour la fabrication de récipients, le fond de moule étant fixé au support 12 par l'intermédiaire de la semelle 14 et le raccordement fluidique établi pour procéder, selon les applications, au refroidissement ou à l'échauffement dudit fond de moule au moyen du fluide caloporteur.

Pour procéder au démontage en vue d'opérer un changement du fond de moule, les étapes décrites précédemment sont exécutées dans l'ordre inverse.

Tel que représenté sur la figure 6, la semelle 14 étant fixée et raccordée au support 12, le dispositif 50 d'actionnement est commandé sélectivement pour déplacer l'équipage mobile de la première position vers la deuxième position.

Pour ce faire de l'air comprimé est introduit dans la chambre 78 de commande et la pression établie provoquant le recul du piston 80 qui coulisse alors de l'avant vers l'arrière entraînant avec lui l'équipage mobile, c'est à dire la paroi 88 mobile portant les bras 44a, 44b et 92a, 92b de verrouillage et les embouts 46a et 46b.

Le dispositif de verrouillage occupe alors l'état déverrouillé, les bras 44a, 44b ne coopérant plus avec les goupilles 40a, 40b ne font pas obstacle au démontage de la semelle 14 qui est libre d'être démontée en étant tirée longitudinalement vers le haut, parallèlement à l'axe principal O du fond de moule et de la semelle 14.

De même, le dispositif de raccordement fluidique occupe alors l'état séparé pour lequel les embouts 46a, 46b sont escamotés vers l'arrière et ce faisant ne sont plus engagés dans les raccords 42a, 42b correspondants.

La semelle 14 est susceptible d'être ôtée du support 12 puis le fond de moule, fixé par les vis 16 sur la semelle 14, désolidarisé de la semelle 14 et changé pour un autre fond de moule qui est comme précédemment fixé à la semelle 14 par les vis 16 avant d'être montée sur le support 12.

Avantageusement, l'équipage mobile selon l'invention permet d'assurer simultanément le verrouillage / déverrouillage et le raccordement fluidique, grâce à quoi le temps requis pour procéder à un changement de moule est susceptible d'être réduit.

Par le terme verrouillage, on entend le passage du dispositif de verrouillage de l'état déverrouillé à l'état verrouillé et de manière analogue pour le raccordement fluidique, le passage de l'état séparé à l'état raccordé.

Par le terme déverrouillage, on entend inversement le passage du dispositif de verrouillage de l'état verrouillé à l'état déverrouillé et de manière analogue l'interruption du raccordement fluidique pour le passage de l'état raccordé à l'état séparé.

Avantageusement, le déplacement de l'équipage mobile s'effectue dans un plan horizontal, orthogonal à l'axe principal O, en permettant d'avoir une course importante pour les moyens de raccordement fluidique.

Une telle course de connexion a une incidence directe sur le choix des moyens de raccordement (embouts et raccords) dont le diamètre est susceptible d'être plus important de manière à réduire les pertes de charge, à augmenter le débit de fluide caloporteur mis en circulation et partant les performances thermiques (refroidissement ou échauffement) du fond de moule.

Avantageusement, un tel ensemble 10 permet d'optimiser l'encombrement vertical car, le support 12 notamment s'étendant principalement horizontalement, il est possible de fabriquer des récipients, tels que des bouteilles, de hauteur plus importante sur un même moule.

En variante non représentée, le fond de moule est muni d'une sonde de température et des moyens de connexion électriques sont alors prévus, notamment entre la semelle 14 et le support 12.

Avantageusement, la source d'air comprimé raccordée au connecteur 64 est susceptible d'être utilisée pour alimenter à travers l'ensemble 10 un dispositif d'assistance au démoulage du fond de moule par application d'un jet d'air sous pression, un tel dispositif est encore connu sous le terme anglais de *"push up".*

## Revendications

1. Ensemble (10) pour la fixation, avec raccordement fluidique, d'un fond de moule sur un support (12), dans lequel le fond de moule d'axe principal (O) est apte à être fixé de manière démontable sur une semelle (14) formant une interface entre le fond de moule et ledit support (12), ledit ensemble (10) comportant au moins :
- un dispositif de verrouillage qui, intervenant entre la semelle (14) et le support (12), comporte respectivement des premiers moyens (44) de verrouillage portés par le support (12) et des deuxièmes moyens (40) de verrouillage complémentaires portés au moins par la semelle (14), ledit dispositif de verrouillage pouvant occuper au moins:
• un état verrouillé dans lequel la semelle (14) est fixée audit support (12), et
• un état déverrouillé dans lequel la semelle (14) est libre d'être démontée ou montée sur ledit support (12) ; et
- un dispositif de raccordement fluidique qui, intervenant entre la semelle (14) et le support (12), comporte au moins des premiers moyens (46) de raccordement portés par le support (12) et destinés à coopérer avec des deuxièmes moyens (42) de raccordement portés par la semelle (14), le dispositif de raccordement fluidique pouvant occuper au moins :
• un état raccordé dans lequel un circuit fluidique du fond de moule est formé à la faveur du raccordement fluidique établi entre le support (12) et la semelle (14) par lesdits premiers moyens (46) de raccordement assemblés avec les deuxièmes moyens (42) de raccordement, et
• un état séparé dans lequel lesdits premiers moyens (46) de raccordement étant disjoints des deuxièmes moyens (42) de raccordement, ledit circuit fluidique du fond de moule est interrompu entre le support (12) et la semelle (14),
**caractérisé en ce que** les premiers moyens (44) de verrouillage et les premiers moyens (46) de raccordement sont liés en déplacement par l'intermédiaire d'une pièce (88) mobile de manière à former ensemble un équipage mobile.

2. Ensemble selon la revendication 1, **caractérisé en ce que**, la semelle (14) étant montée sur le support (12), le verrouillage et le raccordement fluidique, comme le déverrouillage et l'interruption du raccordement fluidique, sont obtenus simultanément en commandant en déplacement ledit équipage mobile.

3. Ensemble selon l'une des revendications 1 ou 2, **caractérisé en ce que** ledit équipage mobile est apte à être déplacé entre au moins :
- une première position dans laquelle le dispositif de verrouillage occupe l'état verrouillé et le dispositif de raccordement fluidique occupe l'état raccordé, et
- une deuxième position dans laquelle le dispositif de verrouillage occupe l'état déverrouillé et le dispositif de raccordement fluidique occupe l'état séparé.

4. Ensemble selon la revendication 3, **caractérisé en ce que** ledit équipage mobile se déplace entre lesdites première et deuxième positions suivant une direction non parallèle à l'axe principal (O) du fond de moule.

5. Ensemble selon l'une des revendications 3 ou 4, **caractérisé en ce que** des moyens (90a, 90b) de rappel élastique sont interposés entre ladite pièce (88) formée par une paroi mobile et une cloison (72) fixe du support (12) de manière à solliciter ladite paroi (88) mobile vers au moins l'une desdites première et deuxième positions.

6. Ensemble selon la revendication 5, **caractérisé en ce que** les moyens (90a, 90b) de rappel élastique sollicitent la paroi mobile vers la première position de l'équipage mobile de manière à obtenir d'une part un rappel automatique vers l'état verrouillé et, d'autre part, une assistance au raccordement fluidique lors de l'assemblage des premiers moyens (46) de raccordement et des deuxièmes moyens (42) de raccordement.

7. Ensemble selon la revendication 3, **caractérisé en ce que** l'ensemble comporte un dispositif (50) d'actionnement qui, associé audit équipage mobile, est apte à agir sur l'équipage mobile pour en commander sélectivement le déplacement entre les première et deuxième positions.

8. Ensemble selon la revendication 7, **caractérisé en ce que** le dispositif (50) d'actionnement est un vérin comportant au moins une chambre (78) de commande associée à un piston (80) qui, formant un organe d'actionnement, est monté de manière étanche dans un alésage (84) du support (12) et commandé en déplacement au moyen de ladite chambre (78) de commande pour entraîner en déplacement ledit équipage mobile entre lesdites première et deuxième positions.

9. Ensemble selon l'une quelconque des revendications précédentes, **caractérisé en ce que** les premiers moyens (46) de raccordement sont constitués par au moins un embout (46a, 46b) de type mâle qui est destiné à être reçu dans un raccord (42a, 42b) complémentaire de type femelle formant les deuxièmes moyens (42) de raccordement.

10. Ensemble selon la revendication 6, **caractérisé en ce que** les premiers moyens (46) de verrouillage portés par la paroi (88) mobile sont constitués par au moins deux bras (44a, 44b) destinés à coopérer chacun avec une goupille (40a, 40b) complémentaire de la semelle (14) formant lesdits deuxièmes moyens (40) de verrouillage.

## Patentansprüche

1. Anordnung (10), um einen Formboden an einem Träger (12) mit fluidtechnischer Verbindung zu befestigen, wobei der Formboden mit Hauptachse (0) demontierbar an einer Sohle (14), die eine Grenzfläche zwischen dem Formboden und dem Träger (12) bildet, befestigt werden kann, wobei die Anordnung (10) wenigstens Folgendes umfasst:
- eine Verriegelungsvorrichtung, die eingefügt zwischen der Sohle (14) und dem Träger (12) erste Verriegelungsmittel (44), die von dem Träger (12) getragen werden, bzw. zweite komplementäre Verriegelungsmittel (40), die wenigstens von der Sohle (14) getragen werden, umfasst, wobei die Verriegelungsvorrichtung wenigstens:
• einen verriegelten Zustand, in dem die Sohle (14) an dem Träger (12) befestigt ist, und
• einen entriegelten Zustand, in dem die Sohle (14) an dem Träger (12) frei demontiert oder montiert werden kann,
einnehmen kann; und
- eine Vorrichtung für fluidtechnische Verbindung, die eingefügt zwischen der Sohle (14) und dem Träger (12) wenigstens erste Verbindungsmittel (46) umfasst, die von dem Träger (12) getragen werden und dazu bestimmt sind, mit zweiten Verbindungsmitteln (42) zusammenzuwirken, die von der Sohle (14) getragen werden, wobei die Vorrichtung für fluidtechnische Verbindung wenigstens:
• einen verbundenen Zustand, in dem ein Fluidkreis des Formbodens für eine fluidtechnische Verbindung gebildet ist, die zwischen dem Träger (12) und der Sohle (14) durch die ersten Verbindungsmittel (46), die mit den zweiten Verbindungsmitteln (42) zusammengefügt sind, hergestellt ist, und
• einen getrennten Zustand, in dem die ersten Verbindungsmittel (46) von den zweiten Verbindungsmitteln (42) getrennt sind, wobei der Fluidkreis des Formbodens zwischen dem Träger (12) und der Sohle (14) unterbrochen ist,
einnehmen kann
**dadurch gekennzeichnet, dass** die ersten Verriegelungsmittel (44) und die ersten Verbindungsmittel (46) über ein bewegliches Teil (88) verlagerbar verbunden sind, derart, dass sie gemeinsam eine bewegliche Anlage bilden.

2. Anordnung nach Anspruch 1, **dadurch gekennzeichnet, dass** dann, wenn die Sohle (14) an dem Träger (12) montiert ist, die Verriegelung und die fluidtechnische Verbindung ebenso wie die Entriegelung und die Unterbrechung der fluidtechnischen Verbindung gleichzeitig durch Steuern der Verlagerung der beweglichen Anlage erhalten werden.

3. Anordnung nach einem der Ansprüche 1 oder 2, **dadurch gekennzeichnet, dass** die bewegliche Anlage wenigstens zwischen:
- einer ersten Position, in der die Verriegelungsvorrichtung den verriegelten Zustand und die Vorrichtung für fluidtechnische Verbindung den verbundenen Zustand einnehmen, und
- einer zweiten Position, in der die Verriegelungsvorrichtung den entriegelten Zustand und die Vorrichtung für fluidtechnische Verbindung den getrennten Zustand einnehmen,
verlagert werden kann.

4. Anordnung nach Anspruch 3, **dadurch gekennzeichnet, dass** sich die bewegliche Anlage zwischen der ersten und der zweiten Position längs einer Richtung verlagert, die zu der Hauptachse (0) des Formbodens nicht parallel ist.

5. Anordnung nach einem der Ansprüche 3 oder 4, **dadurch gekennzeichnet, dass** zwischen dem Teil (88), das durch eine bewegliche Wand gebildet ist, und einer festen Trennwand (72) des Trägers (12) elastische Rückstellmittel (90a, 90b) eingefügt sind, derart, dass die bewegliche Wand (88) in die erste und/oder die zweite Position gedrängt wird.

6. Anordnung nach Anspruch 5, **dadurch gekennzeichnet, dass** die elastischen Rückstellmittel (90a, 90b) die bewegliche Wand in die erste Position der beweglichen Anlage drängen, derart, dass einerseits eine automatische Rückstellung in den verriegelten Zustand und andererseits eine Unterstützung der fluidtechnischen Verbindung halten werden, wenn die ersten Verbindungsmittel (46) und die zweiten Verbindungsmittel (42) zusammengefügt sind.

7. Anordnung nach Anspruch 3, **dadurch gekennzeichnet, dass** die Anordnung eine Betätigungsvorrichtung (50) umfasst, die der beweglichen Anlage zugeordnet ist und darauf einwirken kann, um wahlweise deren Verlagerung zwischen der ersten und der zweiten Position zu steuern.

8. Anordnung nach Anspruch 7, **dadurch gekennzeichnet, dass** die Betätigungsvorrichtung (50) ein Stellzylinder ist, der wenigstens eine Steuerkammer (78) enthält, der ein Kolben (80) zugeordnet ist, der, weil er ein Betätigungsorgan bildet, in einer Bohrung (84) des Trägers (12) dicht montiert ist, und dessen Verlagerung mittels der Steuerkammer (78) gesteuert wird, um die Verlagerung der beweglichen Anordnung zwischen der ersten und der zweiten Position zu betreiben.

9. Anordnung nach einem der vorhergehenden Ansprüche, **dadurch gekennzeichnet, dass** die ersten Verbindungsmittel (46) durch wenigstens einen Ansatz (46a, 46b) des Steckertyps gebildet sind, der dazu bestimmt ist, in einer komplementären Verbindung (42a, 42b) des Buchsentyps, die die zweiten Verbindungsmittel (42) bildet, aufgenommen zu werden.

10. Anordnung nach Anspruch 6, **dadurch gekennzeichnet, dass** die ersten Verriegelungsmittel (46), die von der beweglichen Wand (88) getragen werden, durch wenigstens zwei Arme (44a, 44b) gebildet sind, die dazu bestimmt sind, jeweils mit einem komplementären Zapfen (40a, 40b) der Sohle (14), die die zweiten Verriegelungsmittel (40) bilden, zusammenzuwirken.

## Claims

1. Assembly (10) for fixing, with fluid connection, a mold bottom to a holder (12), in which the mold bottom with its main axis (0) is adapted to be demountably fastened to a plate (14) forming an interface between the mold bottom and said holder (12), said assembly (10) including at least:
- a locking device which, operative between the plate (14) and the holder (12), includes first locking means (44) carried by the holder (12) and complementary second locking means (40) carried at least by the plate (14), said locking device being able to occupy at least:
• a locked state in which the plate (14) is fastened to said holder (12), and
• an unlocked state in which the plate (14) is free to be demounted from or mounted on said holder (12); and
- a fluid connection device which, operative between the plate (14) and the holder (12), includes at least first connecting means (46) carried by the holder (12) and adapted to cooperate with second connecting means (42) carried by the plate (14), the fluid connection device being able to occupy at least:
• a connected state in which a fluid circuit of the mold bottom is formed by virtue of the fluid connection established between the holder (12) and the plate (14) by said first connecting means (46) assembled with the second connecting means (42), and
• a separated state in which, said first connecting means (46) being separated from the second connecting means (42), said fluid circuit of the mold bottom is interrupted between the holder (12) and the plate (14),
**characterized in that** the first locking means (44) and the first connecting means (46) are connected so as to move together by means of a mobile part (88) so as together to form a mobile subassembly.

2. Assembly according to Claim 1, **characterized in that**, the plate (14) being mounted on the holder (12), locking and establishing the fluid connection, and likewise unlocking and interrupting the fluid connection, are obtained simultaneously by driving movement of said mobile subassembly.

3. Assembly according to either one of Claims 1 and 2, **characterized in that** said mobile subassembly is adapted to be moved between at least:
- a first position in which the locking device occupies the locked state and the fluid connection device occupies the connected state, and
- a second position in which the locking device occupies the unlocked state and the fluid connection device occupies the separated state.

4. Assembly according to Claim 3, **characterized in that** said mobile subassembly moves between said first and second positions in a direction that is not parallel to the main axis (0) of the mold bottom.

5. Assembly according to either one of Claims 3 and 4, **characterized in that** return spring means (90a, 90b) are disposed between said part (88) formed by a mobile wall and a fixed partition (72) of the holder (12) so as to urge said mobile wall (88) toward at least one of said first and second positions.

6. Assembly according to Claim 5, **characterized in that** the return spring means (90a, 90b) urge the mobile wall toward the first position of the mobile subassembly so as to obtain on the one hand automatic return to the locked state and on the other hand assistance with the fluid connection when assembling the first connecting means (46) and the second connecting means (42).

7. Assembly according to Claim 3, **characterized in that** the assembly includes an actuating device (50) which, associated with said mobile subassembly, is adapted to act selectively on the mobile subassembly to drive movement thereof between the first and second positions.

8. Assembly according to Claim 7, **characterized in that** the actuating device (50) is an actuator including at least one chamber (78) associated with a piston (80) which, forming an actuating member, is mounted in fluid-tight manner in a bore (84) of the holder (12) and driven by means of said chamber (78) to drive movement of said mobile subassembly between said first and second positions.

9. Assembly according to any one of the preceding claims, **characterized in that** the first connecting means (46) comprise at least one male-type spigot (46a, 46b) that is adapted to be received in a complementary female-type connector (42a, 42b) forming the second connecting means (42).

10. Assembly according to Claim 6, **characterized in that** the first locking means (46) carried by the mobile wall (88) comprise at least two arms (44a, 44b) each adapted to cooperate with a complementary pin (40a, 40b) of the plate (14) forming said second locking means (40).
